# DEMANDE DE BREVET EUROPEEN

(11) **EP 2 428 827 A1**
(43) Date de publication de la demande: **14.03.2012**
(21) Numéro de dépôt: 11181132.9
(22) Date de dépôt: 13.09.2011
(51) Int. Cl.: G02B 6/255

(54) **Dispositif de protection d'une épissure et procédé d'installation d'un tel dispositif**

(30) Priorité: 13.09.2010 FR 1057286
(71) Demandeur: Acome Société Cooperative et Participative Société Anonyme Cooperative de Production à Capital Variable, 75014 Paris (FR)
(72) Inventeur: Martin, Olivier, 50140 MORTAIN (FR); Lesueur, Philippe, 22560 TREBEURDEN (FR)
(74) Mandataire: Callon de Lamarck, Jean-Robert

(57) **Abrégé**

L'invention concerne un Dispositif de protection d'une épissure (30) entre un premier et un second modules optiques (1, 2), le premier module optique (1) étant entouré d'une micro-conduite (10) annelée et le second module optique étant entouré d'une gaine (20), le dispositif comprenant : une partie fixe (II) creuse du côté du second module optique (2) ; une partie ajustable (I) creuse du côté du premier module optique (1) ; une partie principale (P) disposée entre la partie fixe (II) et la partie ajustable (I), la partie principale (P) étant creuse et comprend des dimensions lui permettant de loger l'épissure (30) ; le dispositif de protection est caractérisé en ce que : la partie principale (P) comprend une pièce de jonction (6) ayant une première (64) partie coopérant avec la partie ajustable (I) et une seconde partie (63) comprenant au moins un collet (65) adapté pour coopérer avec la micro-conduite (10) annelée pour pouvoir fixer la pièce de jonction (6) sur la micro-conduite (10) annelée afin de pouvoir rentrer la micro-conduite annelée (10) dans la pièce de jonction (6) ; et en ce que la partie ajustable (I) comporte un manchon de serrage (7) et une bague à collet (8) adaptés pour serrer la pièce de jonction (6) autour de la micro-conduite annelée (10).

## Description

### DOMAINE TECHNIQUE GENERAL

L'invention concerne un dispositif et un procédé de protection d'une épissure de modules optiques raccordant un module optique d'un câble d'abonné à un module optique dérivé d'un câble de distribution d'un réseau FTTH (en anglais, « *Fiber To The Home* »).

### ETAT DE LA TECHNIQUE

Pour connecter un câble d'abonné à un réseau FTTH il est nécessaire de connecter un module optique d'un câble d'abonné à un module optique dérivé d'un câble de distribution du réseau FTTH.

Tel que connu une telle connexion est effectuée par épissurage des fibres optiques contenues dans les deux modules optiques.

Pour effectuer l'épissure les modules sont dénudés et une fois l'épissure effectuée une protection est nécessaire.

Une telle protection peut se présenter sous la forme d'un boitier, d'une armoire etc.

Un problème est que d'une part il n'est pas toujours possible de pouvoir placer un boitier ou une armoire et d'autre part si cela est possible les propriétaires des locaux refusent la présence de tels équipements.

Des dispositifs de protection d'épissure ne présentant pas ces inconvénients sont connus.

De tels dispositifs connus se présentent sous la forme de cylindre concentrique permettant de protéger l'épissure.

On connait du document EP 2 216 662 A1 un dispositif de protection d'une épissure rapporté à un tube principal connecté à un câble de distribution. Un tel dispositif présente notamment l'inconvénient d'être délicat à positionner dans des conduites occupées présentant des coudes de faible rayon de courbure. De plus, un tel dispositif présente de nombreux éléments à raccorder ce qui complexifie son utilisation. En outre, il n'est pas possible de l'adapter aux variations de longueur des modules optiques à raccorder.

### PRESENTATION DE L'INVENTION

Un but de l'invention est de protéger une épissure entre deux modules optiques tout en créant une continuité mécanique entre les modules optiques.

Par épissure on entend la soudure par fusion de deux fibres optiques protégée par un manchon type thermo-rétractable.

Un autre but de l'invention est d'avoir un dispositif présentant un faible coût dont l'installation est facilitée par rapport aux dispositifs connus.

Ainsi selon un premier aspect, l'invention concerne un dispositif de protection d'une épissure entre un premier et un second modules optiques, le premier module optique étant entouré d'une micro-conduite annelée et le second module optique étant entouré d'une gaine, le dispositif comprenant : une partie fixe creuse du côté du second module optique ; une partie ajustable creuse du côté du premier module optique ; une partie principale disposée entre la partie fixe et la partie ajustable, la partie principale étant creuse et comprend des dimensions lui permettant de loger l'épissure ; le dispositif de protection est caractérisé en ce que : la partie principale comprend une pièce de jonction ayant une première partie coopérant avec la partie ajustable et une seconde partie comprenant au moins un collet adapté pour coopérer avec la micro-conduite annelée pour pouvoir fixer la pièce de jonction sur la micro-conduite annelée afin de pouvoir rentrer la micro-conduite annelée dans la pièce de jonction ; et en ce que la partie ajustable comporte un manchon de serrage et une bague à collet adaptés pour serrer la pièce de jonction autour de la micro-conduite annelée.

L'invention est avantageusement complétée par les caractéristiques suivantes, prises seules ou en une quelconque de leur combinaison techniquement possible :
- la partie principale comprend un corps principal creux adapté à protéger l'épissure, le corps principal coopérant avec la partie ajustable au moyen de la pièce de jonction, la seconde partie comportant une paroi interne coopérant avec la gaine du premier module optique ;
- le manchon de serrage creux comporte une première extrémité et une seconde extrémité, la paroi interne de la première extrémité coopérant avec la paroi externe de la seconde partie de la pièce de jonction, la paroi interne du manchon de serrage coopérant avec la micro-conduite annelée du premier module optique ;
- la bague à collet est creuse dont une paroi externe coopère avec la paroi interne de la seconde extrémité de la pièce de jonction, une paroi interne de la bague à collet coopérant avec la micro-conduite annelée du premier module optique ;
- la pièce de jonction comporte une partie centrale coopérant d'une part avec la première partie de la pièce de jonction et d'autre part avec la seconde partie de la pièce de jonction ;
- le collet de la pièce de jonction est adapté pour venir en prise avec une rainure de la micro-conduite annelée du premier module optique ;
- une extrémité de la bague collet est configurée pour venir en prise avec la rainure ;
- la partie principale est transparente pour faciliter son positionnement ;
- la partie principale, la partie ajustable et la partie fixe sont en matériau flexible et résistant pour assurer une résistance à la traction d'au moins 5daN.
- la partie fixe comprend : une bague de verrouillage creuse, en prise avec la gaine du second module optique, la bague de verrouillage comportant deux trous diamétralement opposés disposés sur sa paroi ; la partie principale comprenant en outre un embout à plot creux comportant une première partie, une seconde partie et une partie centrale, la première partie comportant deux plots diamétralement opposés disposés sur sa paroi externe, la première partie étant configurée pour que la première partie soit enfilée dans la bague de verrouillage, la bague de verrouillage et l'embout à plot étant maintenus ensemble par coopération du plot avec les trous.

Et selon un second aspect, l'invention concerne un procédé d'installation d'un dispositif de protection selon le premier aspect de l'invention.

L'invention permet de ne pas avoir de zone de stockage (pas de gestion de sur longueur de fibre). Le dispositif de protection se trouve dans la conduite de l'abonné. Il est tirable dans des gaines encastrées, il est flexible pour glisser dans les coudes des conduites d'abonnés.

En outre le dispositif de protection de l'invention présente les avantages suivant :
- il est résistant à une traction d'au moins 5 daN lors de son installation dans une gaine encastrée ;
- il n'a pas de pièces métalliques et est peu couteux (pièces plastiques moulées) ;
- il est tout diélectrique ;
- il demande une installation manuelle simple et rapide (sans outil)
- il présente un faible diamètre et est sans arêtes saillantes favorisant l'insertion dans des conduites encombrées ou de faibles diamètres ;
- il est ajustable en longueur et est compatible aux différentes longueurs des soudeuses standards du marché ;
- il est flexible dans les gaines encastrées avec des coudes.

### PRESENTATION DES FIGURES

D'autres caractéristiques et avantages de l'invention ressortiront encore de la description qui suit laquelle est purement illustrative et non limitative et doit être lue en regard des dessins annexés sur lesquels :
- la figure 1 est une vue d'ensemble du dispositif de protection d'une épissure conforme à l'invention ;
- la figure 2 est une vue détaillée du dispositif de protection côté câble d'abonné ;
- figure 3 illustre une vue en coupe de la figure 2 ;
- la figure 4 est une vue éclatée de la figure 2;
- la figure 5 est une vue détaillée du dispositif de protection côté réseau de distribution ;
- la figure 6 est une coupe de la figure 5 ;
- la figure 7 est une vue éclatée de la figure 5 ;
- les figures 8 et 9 sont des vues détaillées en coupe d'une partie de la figure 5 ;
- les figures 10a et 10b illustrent les différentes étapes du procédé d'installation du dispositif de protection d'une épissure ;
- la figure 11 illustre les différentes configurations obtenues au cours du procédé d'installation du dispositif de protection d'une épissure
- la figure 12 illustre schématiquement l'ajustement à la longueur de câble du dispositif de protection.

Sur l'ensemble des figures, les éléments similaires portent des références numériques identiques.

### DESCRIPTION DETAILLEE DE L'INVENTION

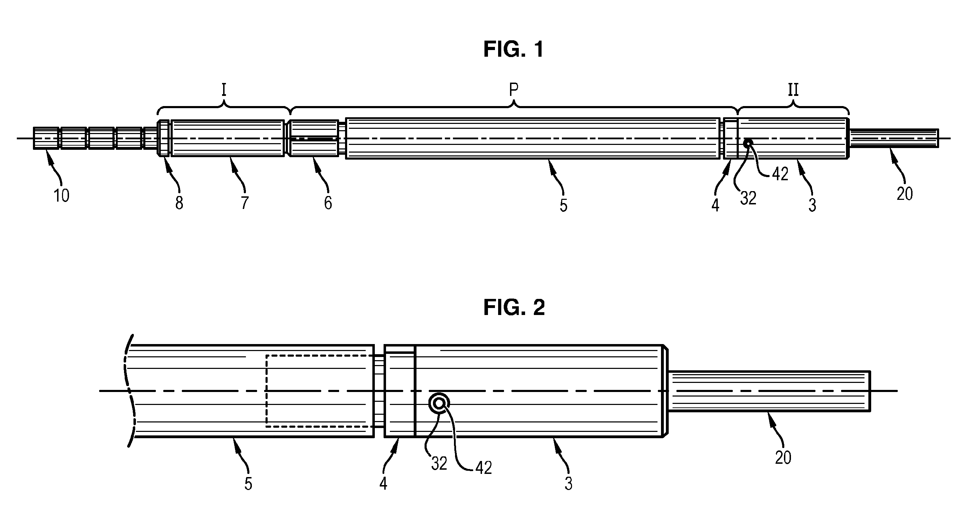

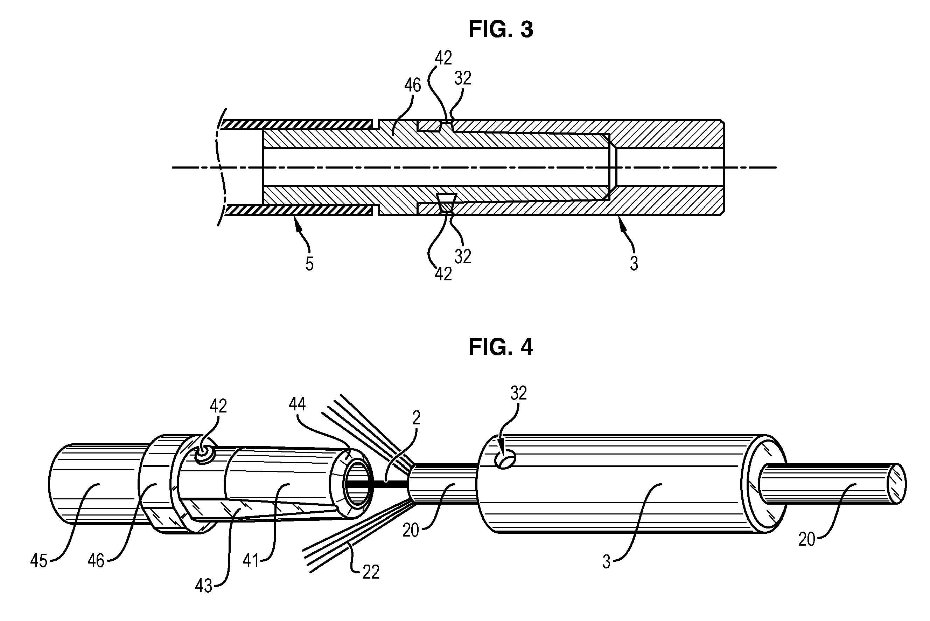

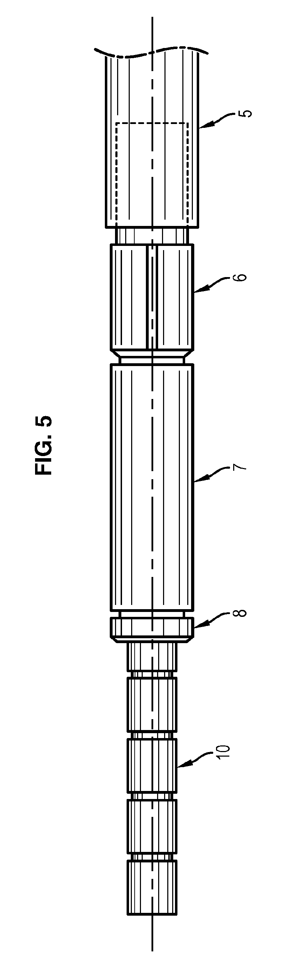

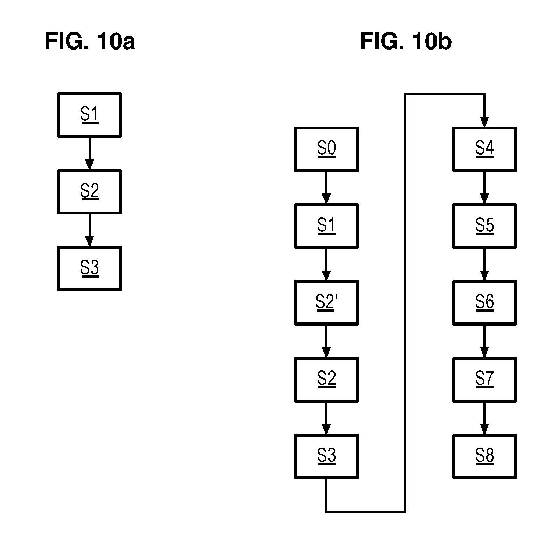

On décrit ci-dessous un exemple de réalisation de l'invention en relation avec les figures 1 à 12.

### Dispositif de protection d'une épissure

On considère une épissure 30 entre un module optique 1 d'un câble de distribution et un module optique 2 d'un câble d'abonné.

Le module optique 1 du câble de distribution est entouré d'une micro-conduite annelée 10 et le module optique 2 du câble d'abonné est entouré d'une gaine 20.

Chaque module optique 1, 2 est entouré d'une gaine 10, 20.

La micro-conduite annelée 10 comporte des rainures 11 a, 11 b. C'est notamment grâce à ces rainures 11 a, 11 b que le dispositif de protection est arrimé à la micro-conduite annelée 10 du premier module optique 1.

L'épissure 30 entre les deux modules optiques 1, 2 est protégée par une partie principale P comportant, de manière avantageuse, un corps principal 5 se présentant sous la forme d'un tube cylindrique creux dont les dimensions lui permettent de loger l'épissure 30.

Le corps principal 5 recouvre l'épissure 30 et coopère de part et d'autre de l'épissure 30 respectivement avec la micro-conduite annelée 10 du premier module optique 1 et la gaine 20 du second module optique 2.

Le dispositif de protection comprend une partie fixe Il creuse située du côté du second module optique 2 c'est-à-dire, du côté abonné et une partie ajustable I située du côté du premier module optique 1 c'est-à-dire, du côté du réseau de distribution.

De manière avantageuse, les éléments qui constituent la partie ajustable I et la partie principale P permettent un ajustement de la longueur du dispositif de protection par rapport à la micro-conduite 10 annelée.

De manière préférée, la partie ajustable I comporte notamment un manchon de serrage 7 et une bague à collet 8 et la partie principale P comporte une pièce de jonction 6 qui permet de relier le corps principal 5 à la partie ajustable I et donc à la micro-conduite annelée 10 du premier module optique 1.

La pièce de jonction 6 est creuse et comporte trois parties coaxiales qui se présentent sous la forme de tubes cylindriques creux : une première et une seconde partie 63, 64 et une partie centrale 62 et sont telles que la première partie 64 comporte une paroi externe coopérant avec le corps principal 5 et que la seconde partie 63 comporte une paroi interne coopérant avec la gaine 10 du premier module optique 1.

La partie centrale 62 et la première partie 64 ne coopèrent pas avec la gaine 10 du premier module optique 1.

La partie principale P est de préférence en matériau transparent qui permet de visualiser le positionnement de ce dernier au niveau de l'épissure 30.

Dans une réalisation particulière, seul le corps principal 5 peut être un tube transparent.

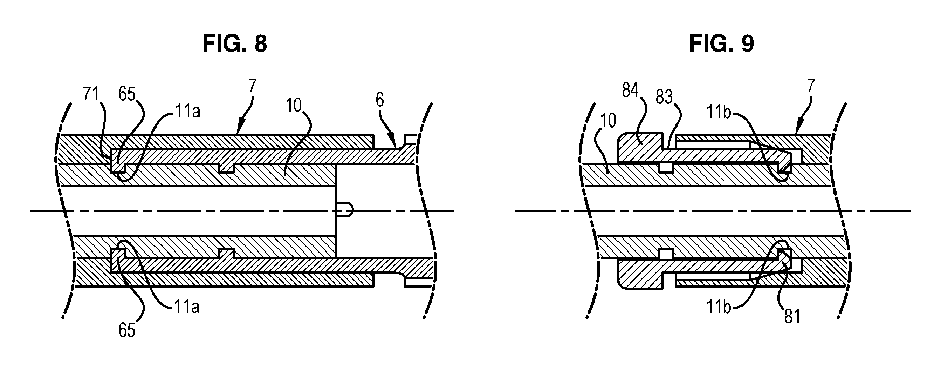

Pour assurer la coopération de la pièce de jonction 6 avec la micro-conduite 10 annelée du premier module optique 1, la seconde partie 63 comporte un collet 65 qui se loge dans la rainure 11 b de la micro-conduite 10 annelée (voir figure 8).

De cette façon, il est possible de fixer la pièce de jonction 6 sur la micro-conduite 10 annelée afin de pouvoir rentrer la micro-conduite annelée 10 dans la pièce de jonction 6.

En outre, pour assurer la flexibilité de la pièce de jonction 6, notamment lors du positionnement de la seconde partie 63 autour de la micro-conduite annelée 10, la seconde partie 63 est avantageusement constituée de deux demi-cylindres de sorte que la seconde partie 63 comporte une fente 61. En effet, le positionnement de cette seconde partie est effectué en force autour de la micro-conduite annelée 10 du premier module optique 1.

Le manchon de serrage 7 se présente sous la forme d'un tube cylindrique creux comportant une première extrémité 71 et une seconde extrémité 72 et est telle que la paroi interne de la première extrémité 71 coopérants avec la paroi externe de la seconde partie 63 de la pièce de jonction 6, la paroi interne du manchon de serrage 7 coopérant avec la micro-conduite annelée 10 du premier module optique 1.

La bague à collet 8 est creuse et est telle que la paroi externe coopère avec la paroi interne de la seconde extrémité 72 du manchon de serrage7, la paroi interne de la bague à collet 8 coopérant avec la micro-conduite annelée 10 du premier module optique 1.

Pour assurer la coopération de la bague à collet 8 avec la micro-conduite annelée 10, cette dernière comporte un collet 81 qui se loge dans la rainure 11a, de la micro-conduite annelée 10. En outre, la bague à collet 8 comporte à l'opposé du collet 81 une ouverture 84 cylindrique de diamètre supérieur au diamètre du collet 81 (voir figure 9).

De la même manière que la pièce de jonction 6, pour assurer la flexibilité de la bague à collet 8, cette dernière comporte une fente 82 pour faciliter son positionnement en force autour de la micro-conduite annelée 10 du premier module optique 1.

Le manchon de serrage 7 comporte à l'intérieur une bague 73 coopérant avec la micro-conduite annelée 10 du premier module optique 1. Cette bague 73 est en butée avec d'une part le collet 65 de la pièce de jonction 6 et d'autre part avec le collet 81 de la bague à collet 8.

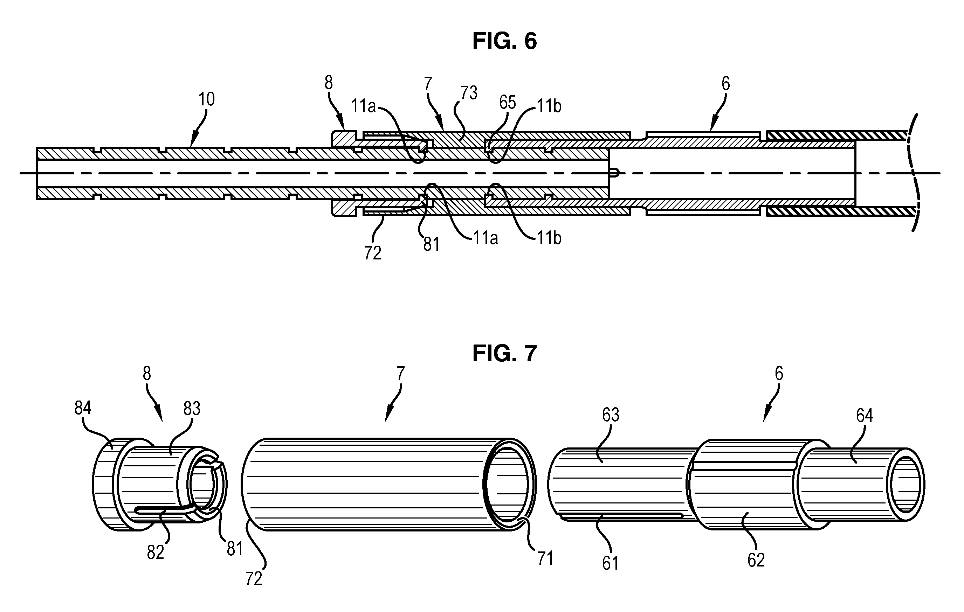

En outre, la seconde extrémité 72 est sensiblement conique (voir figure 6).

Ainsi, le manchon de serrage 7 permet de serrer la bague à collet 8 et la pièce de jonction 6 autour de la micro-conduite annelée 10 du premier module optique 1.

Le bon positionnement de la pièce de jonction 6 et de la bague à collet 8 garantit la bonne tenue en traction de la micro-conduite annelée10 sur le dispositif de protection.

En outre, les dimensions intérieures de la pièce de jonction 6, du manchon de serrage 7 et de la bague à collet 8 permettent d'ajuster la longueur de la micro-conduite annelée 10 dans le dispositif de protection et donc d'optimiser la longueur de l'ensemble du dispositif autour de l'épissure 30.

La partie fixe Il comporte une bague de verrouillage 3 creuse, en prise avec la gaine 20 du second module optique 2.

Avantageusement, la partie principale P comporte un embout à plot 4 creux qui permet de relier le corps principal 5 à la partie fixe Il.

De manière plus précise, la bague de verrouillage 3 est agrippée à la gaine 20 du second module optique par l'intermédiaire de mèches 22.

On précise que les mèches 22 sont des fibres d'aramides présentes dans le câble 20 d'abonné, leur rôle est d'augmenter la résistance à la traction.

La bague de verrouillage 3 comporte deux trous 32 diamétralement opposés disposés sur sa paroi, la bague de verrouillage 3 se présentant sous la forme d'un cylindre creux.

L'embout à plot 4 se présente sous la forme d'un cylindre creux comportant une première partie 41, une seconde partie 45 et une partie centrale 46, la première partie se terminant à son extrémité ouverte 44 de façon conique.

La première partie 41 comporte deux plots 42 diamétralement opposés disposés sur sa paroi externe et est configurée pour que la première partie 41 soit enfilée dans la bague de verrouillage 3, la bague de verrouillage 3 et l'embout à plot 4 étant maintenus ensemble par coopération des plots 42 avec les trous 32.

En outre, la première partie 41 comprend sur sa surface, une forme aplatie 43 en forme de cône qui est configurée pour recevoir les mèches 22.

La forme aplatie 43 favorise une concentration des mèches sur les côtés ce qui a pour effet de renforcer la tenue du plot 42 dans le trou 32. De plus la surface 41 étant granuleuse, elle contribue à l'agrippage des mèches.

Cette reprise d'effort sur les mèches 22 permet d'augmenter la tenue en traction du dispositif de protection.

La particularité du dispositif se situe au niveau de l'adaptation possible à des variations de longueur de module à protéger (distance X sur les figures).

La longueur X doit être compatible avec une soudeuse - qui permet de réaliser l'épissure - et doit être recouvrable complètement par le dispositif de protection donc, soit elle est extrêmement précise à la mise en oeuvre, soit, elle est ajustable.

Compte tenu du fait que les pièces qui composent le dispositif de protection sont assemblées et collées en usine il n'est pas possible de modifier la longueur.

En revanche, la structure des pièces permet de faire rentrer la gaine 10 du premier module optique 1 dans le dispositif de protection. Il s'agit en particulier de l'aspect coulissant du dispositif de protection par rapport à la micro-conduite annelée 10.

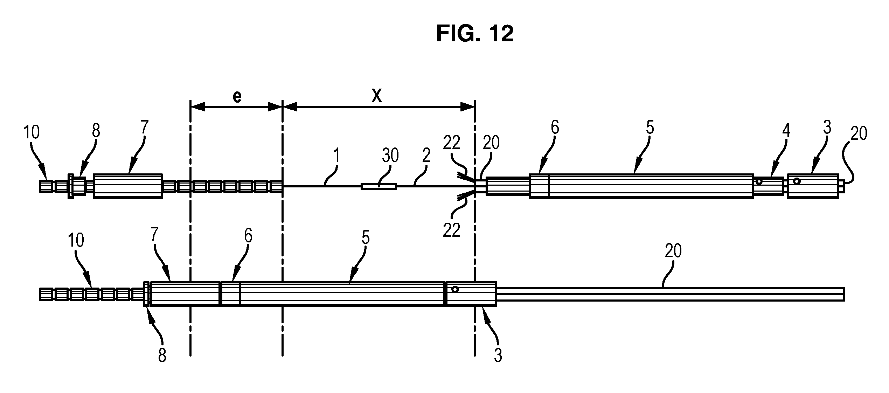

La combinaison d'une micro-conduite 10 annelée et la structure avantageuse de la partie ajustable permet de faire rentrer la micro-conduite annelée 10 pas à pas dans le dispositif de protection. Ainsi, il est possible de rattraper pas à pas une imprécision 'e' qui aurait été détectée après avoir effectuée l'épissure (comme illustré sur la figure 12).

L'ajustement de la longueur s'effectue notamment en poussant la micro-conduite annelée 10 dans la pièce de jonction 6. Grace à la fente 61, les deux demi-cylindres 63 s'écartent lors du passage de la surface interne de la pièce de jonction 6 sur la surface de la micro-conduite 10 annelée. Les cotes sont ajustées afin de permettre l'introduction de la micro-conduite 10 annelée dans la pièce de jonction 6 sur une longueur variable.

Une fois positionné à la bonne longueur dans la rainure 11 b (dépendant de la longueur de l'ensemble formé par le corps principal 5, l'embout à plot 4 et la pièce de jonction 6), le collet 65 est maintenu dans la rainure 11 b aidé par l'effet ressort des deux demi-cylindres 63.

Ainsi, l'épissure est bien positionnée, voire centrée dans le dispositif de protection.

De plus, la transparence du corps principal 5 permet de visualiser que l'épissure et les modules ne subissent pas un allongement ou une tension excessive.

Pour améliorer la tenue à la traction des parties fixe Il et ajustable I, le matériau des éléments du dispositif doit être suffisamment résistant.

Il peut s'agir par exemple du PEI Resin 20% Glass filled (GE Ultemp 2200 ou Equivalent).

L'usage d'un tel matériau permet d'avoir un dispositif de protection diélectrique ce qui est important dans la mesure où un tel dispositif peut être amené à cohabiter avec des installations électriques situées à proximité.

Le caractère isolant des matériaux utilisés assure alors une protection à l'installateur.

En outre, le dispositif de protection offre une bonne flexibilité de manipulation et un bas coût et est facile d'installation et assure une forte tenue en traction de l'épissure, les efforts étant tous reportés sur la micro-conduite annelée 10 et la gaine 20 des modules optiques 1, 2.

### Procédé d'installation du dispositif de protection d'une épissure

L'installation du dispositif de protection de l'épissure intervient après avoir préparé les modules optiques 1, 2 à souder.

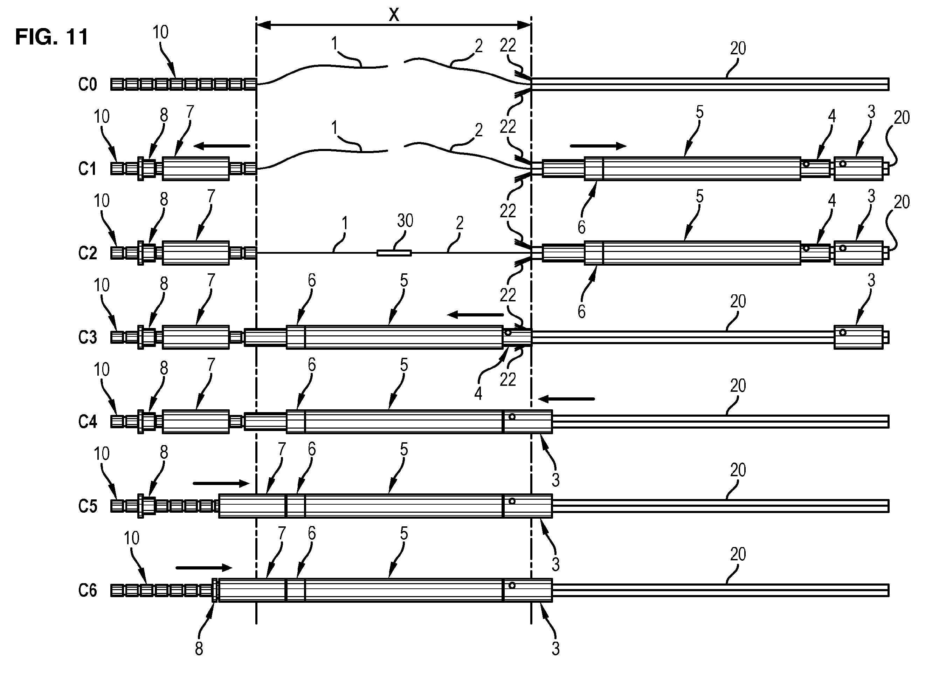

Dans une étape préliminaire S0 (voir configuration C0 illustrée sur la figure 11), le câble d'abonné est dénudé afin d'accéder à la fibre optique 2 sur une longueur permettant l'utilisation ultérieure d'une soudeuse (7 à 15 cm).

Une longueur d'environ 1 cm de mèches 22 est laissée en extrémité de la gaine 20, elle sera utilisée pour l'agrippage du câble sur le dispositif de protection de l'épissure.

Côté réseau, le module optique 1 sélectionné et poussé dans la micro conduite annelée 10 est préparé afin de laisser une longueur permettant l'utilisation ultérieure d'une soudeuse.

De manière générale, le procédé d'installation comprend les étapes suivantes (voir configuration C1 sur la figure 11).

On dispose S1 la partie fixe Il creuse du côté du second module optique 2 : cette étape consiste notamment à enfiler la bague de verrouillage 3 sur la gaine 20 du module optique 2.

On dispose S2 la partie ajustable I creuse du côté du premier module optique 1 : cette étape consiste notamment à monter l'un après l'autre la bague à collet 8 et le manchon de serrage 7 sur quelques centimètres sur la micro-conduite annelée 1. La fente 82 et la flexibilité des demi-cylindres 83 favorisent l'écartement des deux demi-cylindres lors du passage des collets sur la surface de la micro-conduite 10. La forme du collet 81 et le matériau choisi permettent de coulisser la bague à collet 8 sur la micro-conduite 10 annelée dans n'importe quel sens.

On dispose S3 la partie principale P (**constituée** du corps principal 5, de l'embout à plot 4 et de la pièce de jonction 6) dont les dimensions lui permettent de loger l'épissure 30, la partie principale P étant disposée entre la partie fixe II et la partie ajustable 1 : cette étape consiste notamment à enfiler la partie principale P sur la gaine 20 du module optique 2 (voir configuration C2 de la figure 11).

Une fois les éléments du dispositif de protection d'épissure installé, on effectue S4 l'épissure 30 au moyen de tout type de soudeuse du marché (voir configuration C2 de la figure 11) et on déplace S5 le corps principal 5, l'embout à plot 4 et la pièce de jonction 6 de telle manière que le corps principal 5 recouvre l'épissure 30 et les modules optiques 1, 2 dénudés.

On note que le module optique 2 est amené au ras de l'extrémité ouverte 44 de la première partie 41 de l'embout à plot 4 et les mèches 22 sont disposées autour de la surface aplatie 41. Le collet 65 vient quant à lui se positionner dans la rainure 11 b de la micro-conduite annelée 10 du premier module optique 1 (voir configuration C3 de la figure 11).

Pour verrouiller le corps principal 5, la bague de verrouillage 3 est enfilée S6 sur l'embout à plot 4, ces derniers étant maintenus l'un par rapport à l'autre par coopération des trous 32 avec les plots 42 (voir configuration C4 de la figure 11) et le manchon de serrage 7 est enfilé S7 dans la pièce de jonction 6 et empêche celui-ci de sortir de la rainure 11 b de la micro-conduite annelée 10 (voir configuration C5 de la figure 11).

Enfin, la bague à collet 8 est ramenée S8 vers le manchon de serrage 7 jusqu'à l'introduction du collet 81 dans la rainure 11a, de la micro-conduite annelée 10 (voir configuration C6 de la figure 11). La cote au niveau de l'extrémité 72 du manchon de serrage 7 est ajustée pour que la bague à collet 8 puisse s'écarter et glisser le long de la micro-conduite annelée 10. La forme conique 73 du manchon de serrage favorise l'introduction du collet 81 dans la rainure 11 a, et l'empêche de ressortir une fois qu'il est en place. Le bon positionnement du collet 81 dans la rainure 11a, de la micro-conduite annelée 10 garantit la bonne tenue en traction de la micro-conduite sur le dispositif de protection.

De cette façon, le dispositif de protection est correctement positionné sur l'épissure 30. L'installation du dispositif se fait sans outil spécifique (notamment sertissage) et s'ajuste aux différentes longueurs des soudeuses standards du marché.

## Revendications

1. Dispositif de protection d'une épissure (30) entre un premier et un second modules optiques (1, 2), le premier module optique (1) étant entouré d'une micro-conduite (10) annelée et le second module optique étant entouré d'une gaine (20), le dispositif comprenant :
- une partie fixe (11) creuse du côté du second module optique (2) ;
- une partie ajustable (1) creuse du côté du premier module optique (1) ;
- une partie principale (P) disposée entre la partie fixe (11) et la partie ajustable (I), la partie principale (P) étant creuse et comprend des dimensions lui permettant de loger l'épissure (30) ;
le dispositif de protection est **caractérisé en ce que** :
- la partie principale (P) comprend une pièce de jonction (6) ayant une première (64) partie coopérant avec la partie ajustable (I) et une seconde partie (63) comprenant au moins un collet (65) adapté pour coopérer avec la micro-conduite (10) annelée pour pouvoir fixer la pièce de jonction (6) sur la micro-conduite (10) annelée afin de pouvoir rentrer la micro-conduite annelée (10) dans la pièce de jonction (6) ; et **en ce que**
- la partie ajustable (I) comporte un manchon de serrage (7) et une bague à collet (8) adaptés pour serrer la pièce de jonction (6) autour de la micro-conduite annelée (10).

2. Dispositif de protection d'une épissure selon la revendication 1 dans lequel la partie principale (P) comprend un corps principal (5) creux adapté à protéger l'épissure, , le corps principal (5) coopérant avec la partie ajustable (I) au moyen de la pièce de jonction (6), la seconde partie (63) comportant une paroi interne coopérant avec la gaine (10) du premier module optique (1).

3. Dispositif de protection selon la revendication 2 dans lequel le manchon de serrage (7) creux comporte une première extrémité (71) et une seconde extrémité (72), la paroi interne de la première extrémité (71) coopérant avec la paroi externe de la seconde partie (63) de la pièce de jonction (6), la paroi interne du manchon de serrage (7) coopérant avec la micro-conduite annelée (10) du premier module optique (1).

4. Dispositif de protection selon l'une des revendications 2 à 3 dans lequel la bague à collet (8) est creuse dont une paroi externe coopère avec la paroi interne de la seconde extrémité (72) de la pièce de jonction (6), une paroi interne de la bague à collet (8) coopérant avec la micro-conduite annelée (10) du premier module optique (1).

5. Dispositif selon l'une des revendications 2 à 4 dans lequel la pièce de jonction (6) comporte une partie centrale (62) coopérant d'une part avec la première partie de la pièce de jonction (6) et d'autre part avec la seconde partie de la pièce de jonction (6).

6. Dispositif selon l'une des revendications précédentes dans lequel le collet (65) de la pièce de jonction (6) est adapté pour venir en prise avec une rainure (11a, 11b) de la micro-conduite (10) annelée du premier module optique (1).

7. Dispositif selon l'une des revendications 1 à 6 dans lequel une extrémité (81) de la bague collet (8) est configurée pour venir en prise avec la rainure (11a).

8. Dispositif selon l'une des revendications 1 à 8 dans lequel la partie principale (P) est transparente pour faciliter son positionnement.

9. Dispositif selon l'une des revendications précédentes dans lequel la partie principale (P), la partie ajustable (I) et la partie fixe (II) sont en matériau flexible et résistant pour assurer une résistance à la traction d'au moins 5daN.

10. Dispositif selon l'une des revendications précédentes dans lequel la partie fixe (II) comprend :
- une bague de verrouillage (3) creuse, en prise avec la gaine (20) du second module optique (2), la bague de verrouillage (3) comportant deux trous (32) diamétralement opposés disposés sur sa paroi ;
la partie principale (P) comprenant en outre un embout à plot (4) creux comportant une première partie (41), une seconde partie (45) et une partie centrale(46), la première partie comportant deux plots (42) diamétralement opposés disposés sur sa paroi externe, la première partie étant configurée pour que la première partie soit enfilée dans la bague de verrouillage (3), la bague de verrouillage (3) et l'embout à plot étant maintenus ensemble par coopération du plot avec les trous.

11. Procédé d'installation d'un dispositif de protection d'une épissure selon l'une des revendications précédentes comprenant les étapes consistant à :
- disposer (S1) la partie fixe (II) creuse du côté du second module optique (2) ;
- disposer (S2) la partie ajustable (I) creuse du côté du premier module optique (1) ;
- disposer (S3) la partie principale (P) creuse, dont les dimensions lui permettent de loger l'épissure (30), entre la partie fixe (II) et la partie ajustable (I).
